# EUROPEAN PATENT APPLICATION

(11) **EP 4 712 198 A1**
(43) Date of publication of application: **18.03.2026**
(21) Application number: 24810886.2
(22) Date of filing: 08.05.2024
(51) Int. Cl.: H01M 10/12, H01M 50/308, H01M 50/35, H01M 50/392, H01M 50/655

(54) **LEAD ACID BATTERY, AND LIQUID PLUG FOR LEAD ACID BATTERIES**

(30) Priority: 24.05.2023 JP 2023085237
(71) Applicant: GS Yuasa International Ltd., Kisshoin, Minami-ku, Kyoto-shi, Kyoto 601-8520 (JP)
(72) Inventor: YAMASHITA Hiroto, Kyoto-shi, Kyoto 601-8520 (JP); SEKIYA Kazuki, Kyoto-shi, Kyoto 601-8520 (JP)
(74) Representative: Isarpatent
(86) International application number: PCT/JP2024/017105
(87) International publication number: WO 2024/241878

(57) **Abstract**

A lead-acid battery 1 includes: a battery case 10; electrode plates 30A and 30B housed in the battery case 10; an electrolyte solution U housed in the battery case 10; and a vent plug 70 attached to the battery case 10, in which the vent plug 70 includes a tubular plug body 71, a splash guard 90 positioned inside the plug body, and a plurality of catalytic devices 100A, 100B, that promote reaction generating water from gas produced by charge-discharge reaction. Each of the plurality of catalytic devices 100A, 100B include a tubular case 110 with an open front surface, a catalyst layer 120 housed in the case 110, and a permeable membrane 130 covering a front surface of the catalyst layer and allowing gas to pass through. Each of the plurality of catalytic devices 100A, 100B are arranged vertically or inclined with respect to the plug body 71 so that a front surface provided with the permeable membrane 130 has an angle with respect to a horizontal direction. In an up-down direction, either all or at least a part of the plurality of catalytic devices 100A, 100B is arranged at the same height.

## Description

### TECHNICAL FIELD

The present invention relates to a vent plug for use in a lead-acid battery.

### BACKGROUND ART

A lead-acid battery, due to the charging reaction, causes the electrolyte (water) to undergo electrolysis, thereby generating oxygen gas and hydrogen gas. Therefore, an exhaust hole is provided in the upper part of the vent plug or in the lid to exhaust the oxygen gas and hydrogen gas. As a countermeasure against the decrease of the electrolyte solution accompanying electrolysis, there is a method of providing a lead-acid battery with a catalytic component that promotes recombination reaction of oxygen gas and hydrogen gas (reaction returning them to water).

In relation to the above technology, paragraph 18 of Patent Literature 1 describes: "A catalytic component for a lead-acid battery, having a catalyst layer that contains a catalyst that promotes reaction of oxygen and hydrogen to generate water or water vapor, and a configuration that allows at least part of the water or water vapor generated in the catalytic reaction to be condensed and circulated back into the lead-acid battery, and as a whole having gas permeability."
Further, paragraph 46 describes: "More preferably, the baffle plate may be inclined toward the interior of the lead-acid battery. The inclined baffle plate promotes droplets to slide down toward the interior of the lead-acid battery, thereby further suppressing the decrease of the electrolyte solution."

Further, paragraph 16 of Patent Literature 2 descries: "In one embodiment of the present device, a container accommodates a catalyst material in a lead-acid battery, the catalyst material including a catalyst that promotes reaction of oxygen and hydrogen to generate water or water vapor, the container having an opening covered with a membrane, the membrane allowing communication of the oxygen, the hydrogen, and the water vapor between the catalyst material and outside of the container and being oriented at an angle of 0° or more and 80° or less with respect to the gravitational direction."

### Patent Literature

Patent Literature 1: Japanese Patent Publication No. 6576297
Patent Literature 2: Japanese Utility Model Registration Publication No. 3229214

### DISCLOSURE OF INVENTION

### PROBLEMS TO BE SOLVED BY THE INVENTION

A lead-acid battery generates oxygen gas and hydrogen gas upon charging, causing the liquid level of the electrolyte solution to rise. When a catalytic device (catalytic component) is arranged inside the vent plug in addition to a splash guard, the overall length of the vent plug increases, so that during the rise of the liquid level, the distance from the liquid level to the vent plug becomes shorter.

In particular, when the catalytic device is arranged vertically or inclined relative to the plug body, water recombined from the gas can more easily return to the battery container. However, since the overall length of the vent plug is increased, the rising liquid level may reach the vent plug. If the liquid level reaches the vent plug, the electrolyte solution may flow along the interior of the vent plug and leak out through the exhaust hole.

A problem to be solved by the present invention is to suppress leakage of the electrolyte solution by securing the distance from the liquid level of the electrolyte solution to the vent plug while maintaining the catalytic performance of the catalytic device.

### MEANS FOR SOLVING THE PROBLEMS

A lead-acid battery includes: a battery case; electrode plates housed in the battery case; an electrolyte solution housed in the battery case; and a vent plug attached to the battery case.

The vent plug includes a tubular plug body, a splash guard positioned inside the plug body, and a plurality of catalytic devices that promote reaction generating water from gas produced by charge-discharge reaction.

Each of the plurality of catalytic devices includes a tubular case with an open front surface, a catalyst layer housed in the case, and a permeable membrane covering the front surface of the catalyst layer and allowing gas to pass through. Each of the plurality of catalytic devices are arranged vertically or inclined with respect to the plug body so that the front surface of the permeable membrane has an angle with respect to a horizontal direction. In an up-down direction, either all or at least a part of the plurality of catalytic devices is arranged at the same height.

The present technology can be used in a vent plug for a lead-acid battery.

### EFFECT OF THE INVENTION

The present technology can suppress leakage of the electrolyte solution by securing the distance from the liquid level of the electrolyte solution to the vent plug while maintaining the catalytic performance of the catalytic device.

### BRIEF DESCRIPTION OF DRAWINGS

FIG. 1 is a perspective view of a lead-acid battery.
FIG. 2 is a perspective view of a battery container.
FIG. 3 is a sectional view of the lead-acid battery (section along line A-A in FIG. 1).
FIG. 4 is a front view of a vent plug.
FIG. 5 is an enlarged view of a part of FIG. 3 (vent plug portion).
FIG. 6 is a perspective view of a partially cut-away catalytic device.
FIG. 7 is a perspective view of a partially cut-away catalytic device.
FIG. 8A is an illustrative view of the positional relationship in an up-down direction of two catalytic devices.
FIG. 8B is an illustrative view of the positional relationship in an up-down direction of two catalytic devices.
FIG. 9 is a horizontal sectional view of the vent plug.
FIG. 10 is a vertical sectional view of the vent plug.
FIG. 11 is a horizontal sectional view of the vent plug.
FIG. 12 is an illustrative view of a state in which the catalytic devices are arranged inclined.
FIG. 13A is an illustrative view of the arrangement of the catalytic devices.
FIG. 13B is an illustrative view of the arrangement of the catalytic devices.
FIG. 14 is a front view of the vent plug.

### DESCRIPTION OF EMBODIMENTS

### (Overview of the Present Embodiment)

(1) A lead-acid battery according to one embodiment of the present invention includes: a battery case; electrode plates housed in the battery case; an electrolyte solution housed in the battery case; and a vent plug attached to the battery case.

The vent plug includes a tubular plug body, a splash guard positioned inside the plug body, and a plurality of catalytic devices that promote reaction generating water from gas produced by charge-discharge reaction.

Each of the plurality of catalytic devices include a tubular case with an open front surface, a catalyst layer housed in the case, and a permeable membrane covering a front surface of the catalyst layer and allowing gas to pass through. Each of the plurality of catalytic devices are arranged vertically or inclined with respect to the plug body so that a front surface of the permeable membrane has an angle with respect to a horizontal direction. In an up-down direction, either all or at least a part of the plurality of catalytic devices is arranged at the same height.

According to the lead-acid battery described in (1), the catalytic devices are arranged vertically or inclined with respect to the plug body. With such a configuration, water recombined from the gas by the catalytic devices moves along the front surface of the permeable membrane due to the inclination of the catalytic devices, and thus easily returns to the battery container.

The recombination capability required for the catalytic device depends on the amount of catalyst and the catalyst surface area. Compared with the case where only one catalytic device is provided, in the case where a plurality of catalytic devices are provided, the amount of catalyst and the surface area per catalytic device can be reduced. Therefore, the catalytic devices can be downsized. In this configuration, since a plurality of downsized catalytic devices are arranged at the same height in the vent plug, the overall length of the vent plug can be reduced (the same applies when a part of the catalytic devices is arranged at the same height).

By shortening the overall length of the vent plug, it becomes possible to secure the distance from the liquid level to the vent plug. Therefore, even if the liquid level rises due to charging or the like, it becomes less likely for the liquid level to reach the vent plug. As a result, leakage of the electrolyte solution through the interior of the vent plug and out of the exhaust hole can be suppressed.

(2) In the lead-acid battery according to the above-described (1), the number of the catalytic devices may be two, and when viewed in the up-down direction, the two catalytic devices may be arranged with front surfaces or back surfaces thereof being opposed in the plug body.

According to the lead-acid battery described in (2), two catalytic devices can be arranged using, for example, the central space of the plug body. Further, when used with their front surfaces facing each other, the two catalytic devices are preferably arranged with their front surfaces separated by a predetermined distance. By separating the front surfaces of the two catalytic devices by a predetermined distance, gas flow to and from the catalytic devices is not impeded, and the catalytic performance can be maintained.

(3) In the lead-acid battery according to the above-described (1), the number of the catalytic devices may be three or more, and when viewed in the up-down direction, the catalytic devices may be arranged in a circular pattern in the plug body. Here, "arranged in a circular pattern" refers to an arrangement in which three or four catalytic devices are positioned in the form of a polygon, such as a triangle or a quadrilateral.

According to the lead-acid battery described in (3), three or more catalytic devices can be arranged using the space along the inner periphery of the plug body. The central space of the plug body can, for example, be used to accommodate components for holding the catalytic devices or the like, and can also serve as a gas exhaust path.

### <First Embodiment>

The first embodiment will be described with reference to the drawings.

### 1. Structure of lead-acid battery 1

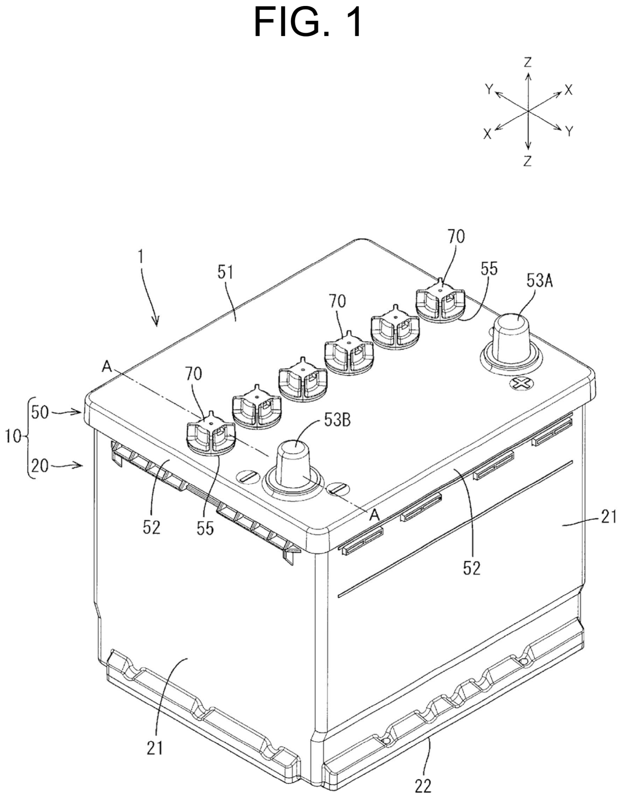

As illustrated in FIGs. 1 to 3, a lead-acid battery 1 includes a battery case 10, an electrode plate group 30 serving as a power generation element, and an electrolyte solution 35. In the following description, when the battery case 10 is placed horizontally without inclination with respect to an installation surface, a width direction of the battery case 10 (a direction in which external terminals 53A and 53B are arranged) is defined as X direction, an up-down direction (a height direction) of the battery case 10 is defined as a Z direction, and a depth direction is defined as Y direction.

The battery case 10 includes a battery container 20 and a lid member 50. The battery container 20 is, for example, made of a synthetic resin. The battery container 20 has four outer walls 21 and a bottom wall 22, forming a box shape with an open upper surface.

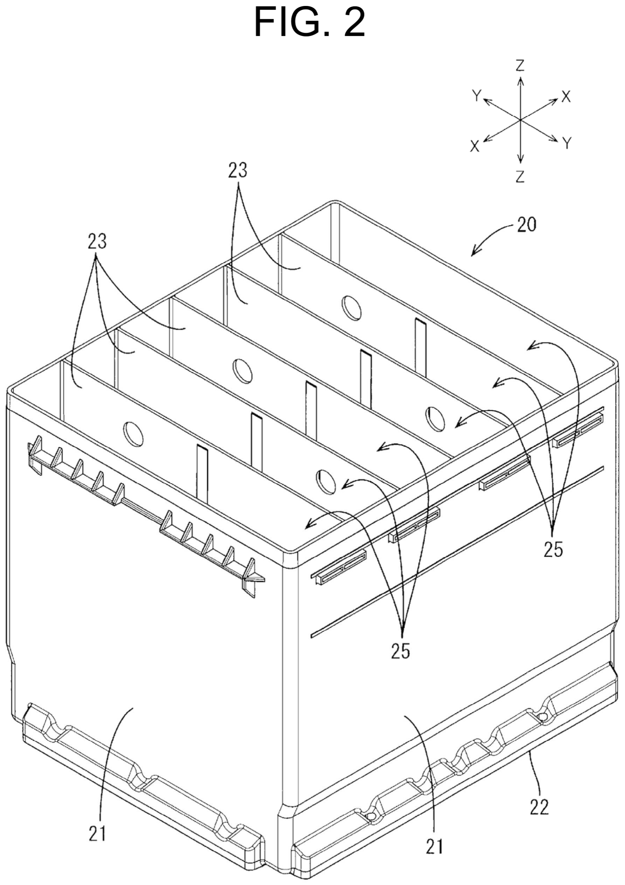

As illustrated in FIG. 2, the interior of the battery container 20 is partitioned into a plurality of cell chambers 25 by partition walls 23. The number of the cell chambers 25 provided is six, which are provided in the width direction (X direction in FIG. 2) of the battery container 20, and each cell chamber 25 accommodates an electrode plate group 30 along with an electrolyte solution 35 composed of dilute sulfuric acid.

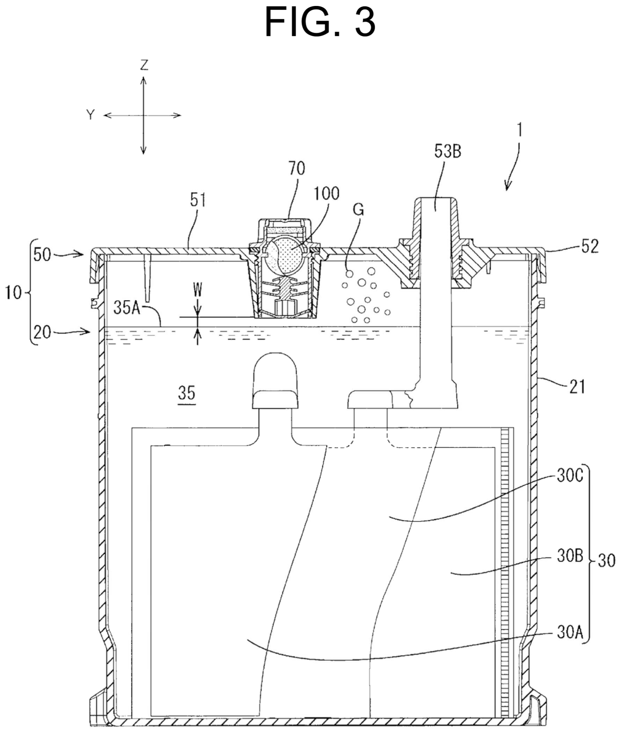

As illustrated in FIG. 3, the electrode plate group 30 is configured by a positive electrode plate 30A, a negative electrode plate 30B, and a separator 30C that separates the positive and negative electrode plates 30A and 30B. Each of the electrode plates 30A and 30B is configured by filling a grid structure with an active material.

The lid member 50 is, for example, made of synthetic resin and includes a flat plate portion 51 and an outer peripheral wall 52. The flat plate portion 51 has a size sufficient to seal the upper surface of the battery container 20. The outer peripheral wall 52 extends downward from an outer edge of the flat plate portion 51.

On a back surface of the lid member 50, lid partition walls (not illustrated) corresponding to the partition walls 23 are formed. The lid member 50 is mounted so as to overlap the battery container 20 and is thermally welded to the battery container 20. The lid member 50 seals the upper surface of the battery container 20.

The lead-acid battery 1 is provided with a positive electrode external terminal 53A and a negative electrode external terminal 53B. As illustrated in FIG. 1, the positive electrode external terminal 53A and the negative electrode external terminal 53B are arranged on both sides in X direction of the lid member 50.

The lead-acid battery 1 further includes a vent plug 70. The vent plug 70 is attached to a filling port 55 of the lid member 50. The filling port 55 and the vent plug 70 are provided in six sets corresponding to the six cell chambers 25. By removing a vent plug 70, a replenishing liquid can be supplied from a filling port 55 to a corresponding cell chamber 25 of the battery container 20.

### 2. Structure of vent plug 70

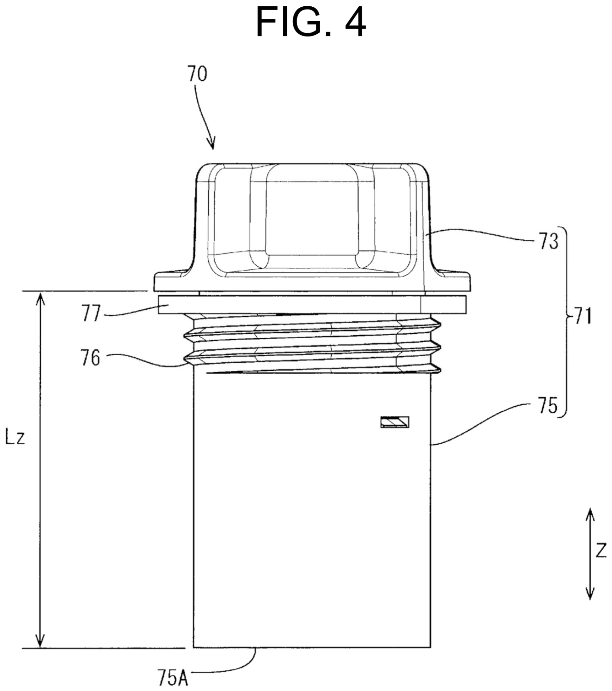

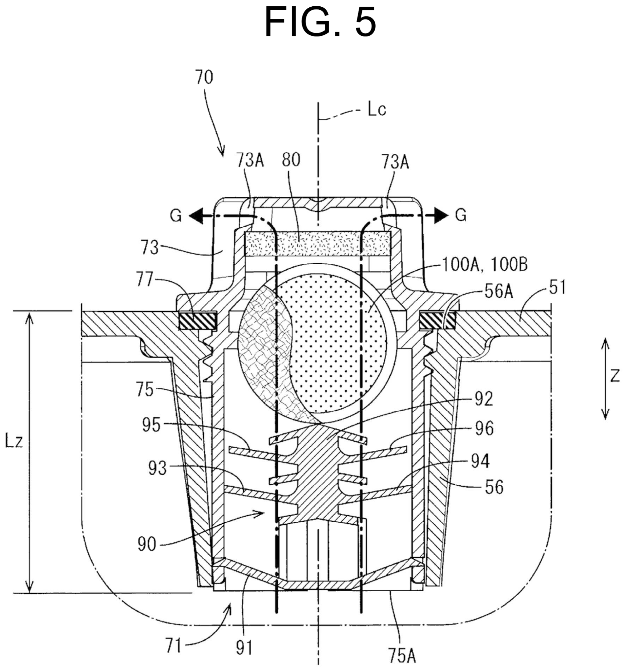

As illustrated in FIGs. 4 and 5, the vent plug 70 includes a plug body 71, a packing 77, a filter 80, a splash guard 90, and two catalytic devices 100A and 100B.

The plug body 71 is, for example, made of synthetic resin and includes a circular head portion 73 and an outer peripheral wall 75. The outer peripheral wall 75 extends downward from the head portion 73 and has a substantially cylindrical shape around an axis Lc in Z direction.

The outer peripheral wall 75 has a threaded portion 76 on its outer circumference. The lid member 50 is provided with an inner wall portion 56 corresponding to the filling port 55. A screw thread that engages with the threaded portion 76 is formed on an inner surface of the inner wall portion 56. The vent plug 70 is removably secured to the lid member 50 by screwing the threaded portion 76 into the inner wall portion 56 surrounding the filling port of the lid member 50.

The packing 77 is, for example, a ring-shaped member made of synthetic rubber or the like. The lower surface of the packing 77 closely contacts the stepped surface 56A of the inner wall portion 56, ensuring airtightness around the filling port.

As illustrated in FIG. 5, the vent plug 70 has an opening 75A on a lower surface of the outer peripheral wall 75 and an exhaust hole 73A on the head portion 73. The opening 75A is an inlet for introducing gas G generated in the cell chamber 25 into the vent plug. The exhaust hole 73A is provided to exhaust the gas G to outside. The gas G is oxygen gas or hydrogen gas generated in the cell chamber 25 by electrolysis of water due to charging or the like.

The vent plug 70 holds the filter 80, the splash guard 90, and the two catalytic devices 100A and 100B inside. Specifically, they are held in order from top to bottom as follows: the filter 80, the two catalytic devices 100A and 100B, and the splash guard 90.

As illustrated in FIG. 5, the filter 80 is positioned inside the head portion 73. The filter 80 is a sintered body of a ceramic such as alumina or a sintered body of resin particles such as polypropylene, and is a porous body.

The filter 80 is an explosion-proof filter that removes electrolyte solution spray from the gas G and suppresses entry of sparks or the like generated outside into the battery container 20. The filter 80 may be omitted.

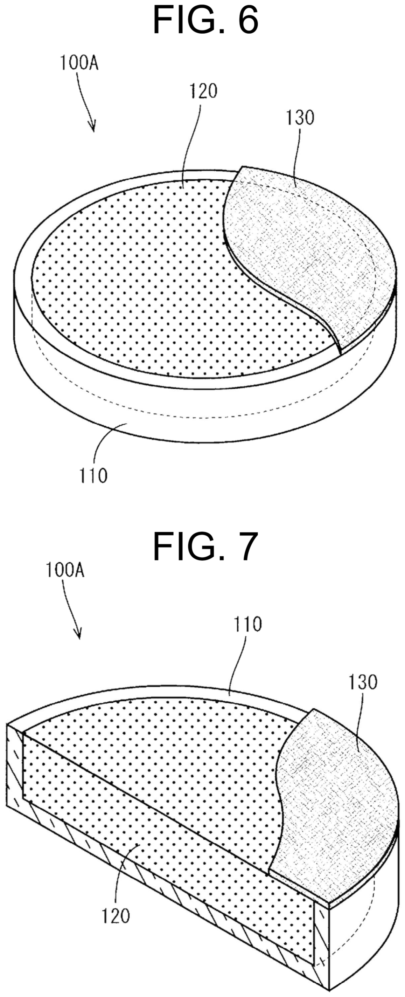

As illustrated in FIGs. 6 and 7, each of the catalytic devices 100A and 100B are configured by a case 110, a catalyst layer 120, and a permeable membrane 130. The case 110 is made of resin and is a bottomed cylindrical shape.

The catalyst layer 120 is positioned inside the case 110. The catalyst layer 120 promotes recombination reaction of oxygen gas and hydrogen gas (reaction returning them to water).

The permeable membrane 130 is positioned on a front surface of the case 110 and covers the catalyst layer 120. The permeable membrane 130 is porous and allows oxygen gas, hydrogen gas, and water vapor to pass through. The permeable membrane 130 is preferably made of a material that does not react with the electrolyte solution inside the battery, and, as an example, porous PTFE can be used.

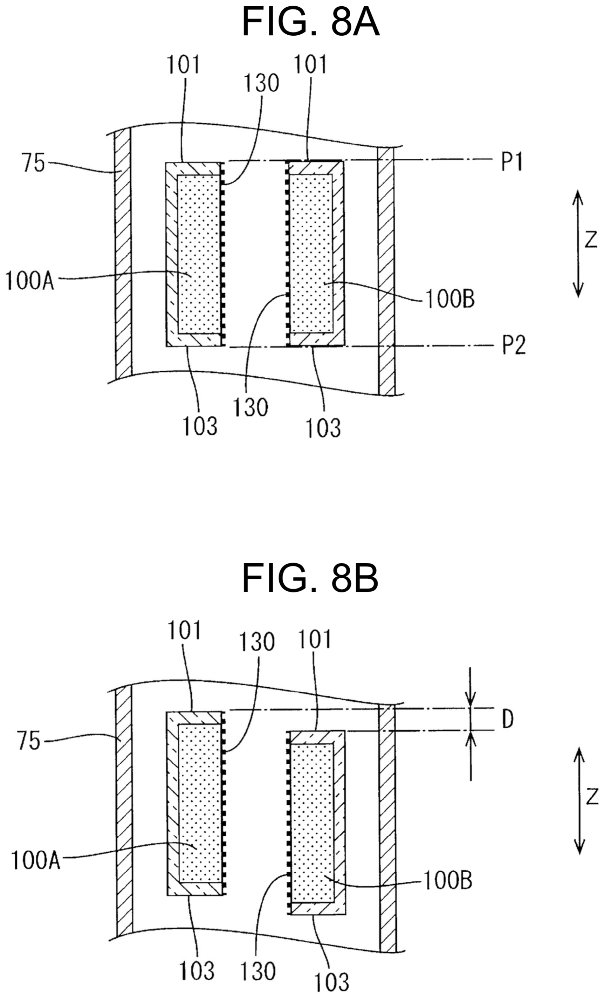

As illustrated in FIGs. 8A and 8B, the catalytic device 100 is mounted on the plug body 71 vertically so that the front surface provided with the permeable membrane 130 that allows the gas G to pass through is at 90 degrees with respect to the horizontal direction (left-right direction in FIG. 8).

In the present embodiment, as illustrated in FIG. 8A, the two catalytic devices 100A and 100B have their upper end 101 and lower end 103 aligned at points P1 and P2, respectively, in the Z direction (up-down direction), and are arranged at the same height.

The two catalytic devices 100A and 100B only need to have at least a portion at the same height in Z direction (i.e., at least a portion overlapping) when viewed from the horizontal direction (left-right direction in FIG. 8). As illustrated in FIG. 8B, the positions of the respective upper ends 101 and the respective lower ends 103 in Z direction may be displaced. The "D" in FIG. 8B indicates the displacement in height.

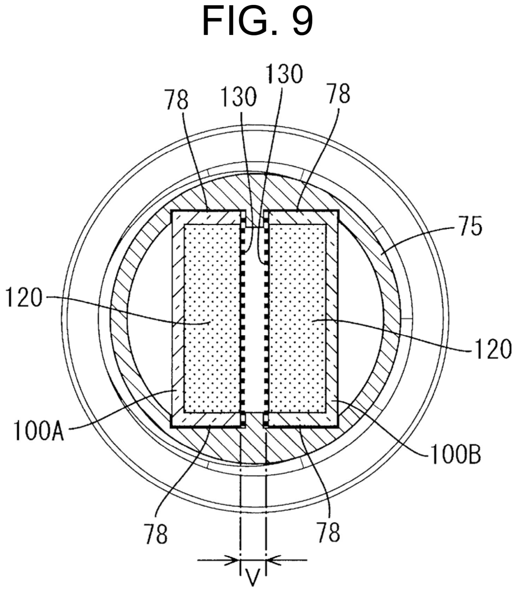

FIG. 9 is a horizontal sectional view of the vent plug 70. In the present embodiment, the two catalytic devices 100A and 100B are arranged to be separated by a predetermined distance V, with the permeable membranes 130 opposite each other. Specifically, the two catalytic devices 100A and 100B are arranged in a state facing each other in parallel.

In the present embodiment, the two catalytic devices 100A and 100B are held inside the plug body by sandwiching their outer peripheral portions with the outer peripheral wall 75 of the plug body 70. In addition, grooves 78 may be provided in the outer peripheral wall 75 to restrict the positions of the catalytic devices 100A and 100B.

Thus, in a horizontal section, the front surfaces of the permeable membranes 130 of the two catalytic devices 100A and 100B do not overlap and are separated from each other. If they overlap, water droplets formed by the catalytic reaction may adhere to the front surface of the other catalytic device, possibly reducing the catalytic performance. In particular, when the positions of the two catalytic devices 100A and 100B are displaced in up-down direction (see FIG. 8B), water droplets formed by the catalytic reaction of the upper catalytic device 100A may adhere to the front surface of the lower catalytic device 100B, potentially reducing the catalytic performance (FIG. 8B). By arranging the two catalytic devices 100A and 100B with the front surfaces of the permeable membranes 130 separated, as illustrated in FIG. 9, the reduction in catalytic performance due to water adhesion can be suppressed.

The splash guard 90 is, for example, made of resin. As illustrated in FIG. 5, the splash guard 90 includes a bottom portion 91, a post portion 92, a first splash-preventing plate 93, a second splash-preventing plate 94, a third splash-preventing plate 95, and a fourth splash-preventing plate 96. The number of splash-preventing plates is not limited to four and may, for example, be five, six, etc.

By having the first splash-preventing plate 93 through the fourth splash-preventing plate 96, the splash guard 90 forms a labyrinthine exhaust path for the gas G inside the plug body 71, preventing the electrolyte solution 35 from easily reaching the exhaust hole 73A and leaking to outside.

Also in the present embodiment, the splash guard 90 has its upper part in contact with the bottom portions of the two catalytic devices 100A and 100B, and also functions to support the two catalytic devices 100A and 100B inside the plug body.

It should be noted that the splash guard 90 does not have a structure to close the internal space of the plug body 71, and has a gap at a portion other than the section illustrated in FIG. 5, through which the gas G can move.

### 3. Effects

According to the lead-acid battery 1 of the present embodiment, the two catalytic devices 100A and 100B are attached vertically to the vent plug 70. Therefore, water recombined from the gas G by the catalytic devices 100A and 100B moves downward along the front surface of the permeable membrane 130 due to the inclination of the catalytic devices 100A and 100B, and thus easily returns to each cell chamber 25 of the battery container 20.

Also, the recombination capability required for the catalytic device depends on the amount of catalyst and the catalyst surface area. Compared with the case where only one catalytic device is provided, in the case where a plurality of catalytic devices are provided (two devices, 100A and 100B, in the present embodiment), the amount of catalyst and the surface area per catalytic device can be reduced (about half the amount of catalyst and about half the surface area in the present embodiment). Therefore, the catalytic devices 100A and 100B can be downsized.

According to the lead-acid battery 1, two downsized catalytic devices 100A and 100B are housed in the vent plug 70, and the catalytic devices 100A and 100B are arranged at the same height overall. Therefore, the length Lz of the outer peripheral wall 75 of the vent plug 70 (see FIG. 5) can be shortened.

By shortening the length Lz of the outer peripheral wall 75 of the vent plug 70 (see FIG. 5), it becomes possible, as illustrated in FIG. 3, to secure the distance W from the liquid level 35A to the vent plug 70. Therefore, even if the liquid level 35A rises due to charging or the like, it becomes less likely for the liquid level 35A to reach the vent plug 70.

By suppressing the liquid level 35A from reaching the vent plug 70, leakage of the electrolyte solution 35 through the interior of the vent plug 70 and out of the exhaust hole 73A can be suppressed.

In the lead-acid battery 1, since the catalytic devices 100A and 100B are arranged at a predetermined distance from each other, even when the two catalytic devices 100A and 100B are housed in the plug body 70, the gas G permeability is not impaired, and an increase in internal pressure due to poor ventilation of the gas G can be suppressed.

Furthermore, if the front surfaces, on which the permeable membranes 130 are installed, are arranged to face each other, the gas G flowing through the exhaust path between the two catalytic devices 100A and 100 toward the exhaust hole 73A can be efficiently returned to water.

### <Second Embodiment>

In the first embodiment, the two catalytic devices 100A and 100B were arranged above the vent plug 70, and the splash guard 90 was arranged below. In the second embodiment, the vertical arrangement of the catalytic devices 100 and the splash guard 90 is inverted, with the splash guard 90 arranged above the vent plug 170 and the two catalytic devices 100A and 100B arranged below.

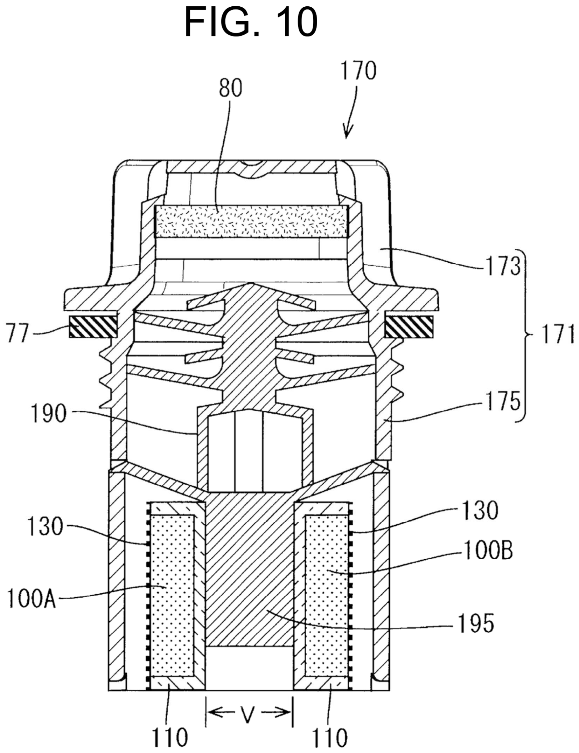

As illustrated in FIG. 10, the vent plug 170 includes a plug body 171, a packing 77, a filter 80, a splash guard 190, and two catalytic devices 100A and 100B. The plug body 171 has a head portion 173 and a tubular outer peripheral wall 175 with an open lower surface.

The vent plug 170 holds the filter 80, the splash guard 190, and the two catalytic devices 100A and 100B inside the plug body 171. Specifically, they are held in order from top to bottom as follows: the filter 80, the splash guard 190, and the two catalytic devices 100A and 100B.

As illustrated in FIG. 10, the two catalytic devices 100A and 100B face each other in parallel at a predetermined distance V, with their back surfaces (the bottom surface 110A of the case 110) opposed.

The second embodiment has a structure that holds the two catalytic devices 100A and 100B by the outer peripheral wall 175 and a rectangular post 195 installed at the center of the vent plug 170. In this example, the post 195 is integrated with the splash guard 190; however, it may also be a separate component. The catalytic devices 100A and 100B may be held by a different structure.

In addition, although the second embodiment illustrates a configuration in which the entirety of the catalytic devices 100A and 100B is housed in the vent plug 170, the present invention is not limited to such a configuration. A part of the catalytic devices 100A and 100B may protrude downward from the lower surface of the vent plug 170.

### <Other Embodiment(s)>

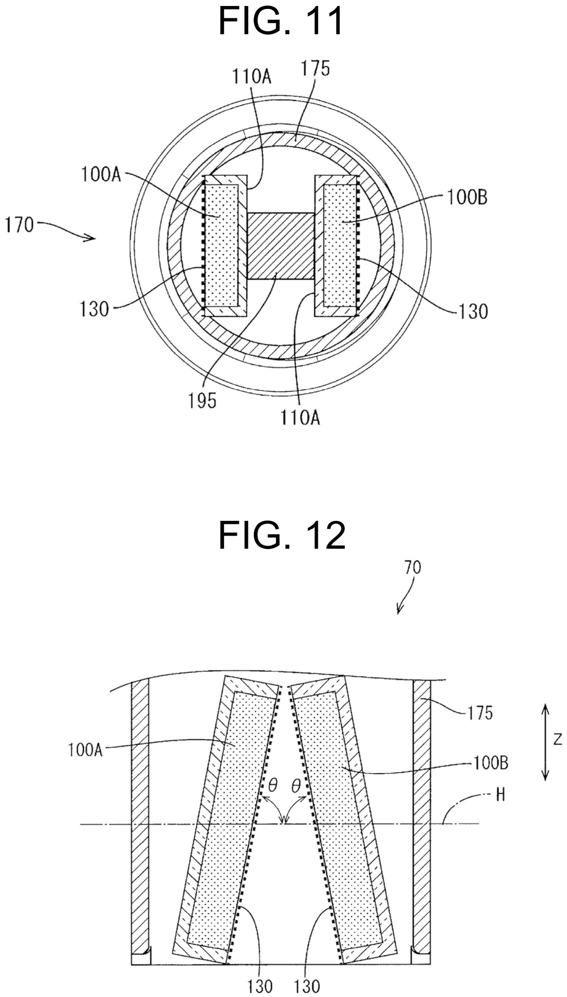

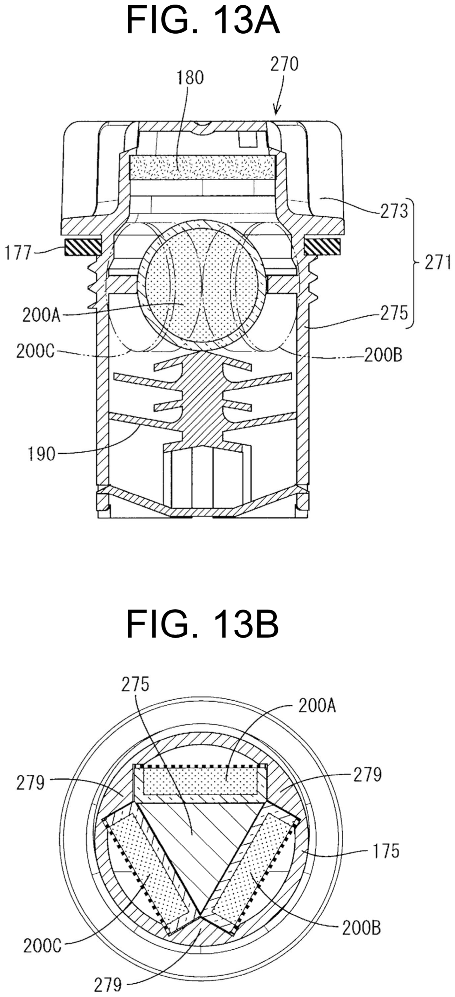

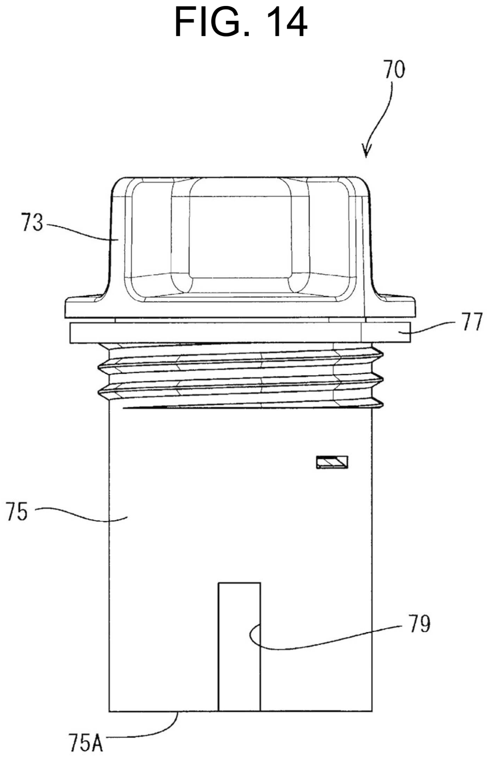

The present invention is not limited to the embodiments described above with reference to the description and the drawings. For example, the following embodiments are also included in the technical scope of the present invention.
(1) In the first embodiment, the lead-acid battery is intended for use in four-wheeled vehicles and two-wheeled vehicles, however, the application is not limited to the examples of the embodiments. The lead-acid battery may also have an arrangement of the cell chambers 25 different from that disclosed in the first embodiment. For example, there may be a matrix arrangement such as three rows in the depth direction by two columns in the lateral direction. A lead-acid battery having such a matrix arrangement may be used in large vehicles such as buses. The present invention can also be applied to a lead-acid battery in which the cell chambers 25 are arranged in a matrix.
(2) In the first embodiment, as one example of the vent plug 70, a configuration was illustrated in which the head portion 73 protrudes from the upper surface of the lid member 50, and the head portion 73 is attached and detached by being rotated with fingers. However, the shape of the vent plug 70 is not limited to the configuration illustrated in the first embodiment. For example, the vent plug 70 may have a configuration in which the head portion 73 does not protrude from the upper surface of the lid member 50, and the head portion 73 is attached and detached by inserting a coin into a groove, such as a cross-shaped or other shape, formed in the head portion 73.
(3) In the first embodiment, a configuration is described in which the two catalytic devices 100A and 100B are housed vertically in the vent plug 70. As illustrated in FIG. 12, the two catalytic devices 100A and 100B may also be housed in the vent plug 70 in an inclined state. The inclined state refers to a state in which the angle θ of the front surfaces of the catalytic devices 100A and 100B (the front surfaces of the permeable membranes 130) with respect to the horizontal line H is greater than 0 degrees and less than 180 degrees (0 < θ < 180).
(4) In the first embodiment, the two catalytic devices 100A and 100B are housed in the vent plug 70. However, three or more catalytic devices may also be arranged in the vent plug. For example, as illustrated in FIGs. 13A and 13B, three catalytic devices 200A, 200B, and 200C may be arranged in the vent plug 270. In FIG. 13A, reference numeral 271 denotes the plug body of the vent plug 270, reference numeral 273 denotes the head portion of the plug body 271, and reference numeral 275 denotes the outer peripheral wall of the plug body 271. The three catalytic devices 200A, 200B, and 200C may, for example, be arranged in an equilateral triangular pattern. This particular example has a structure that holds the three catalytic devices 200A to 200C by protrusions 279 formed on the inner periphery of the outer peripheral wall 275 and an equilateral triangular post 275 installed at the center of the vent plug 270. The catalytic devices 200A to 200C may also be held by a different structure.
(5) In the second embodiment, as one example of the vent plug 170, a configuration is described in which the two catalytic devices 100A and 100B are arranged with their back surfaces facing each other with respect to the plug body 171. When arranging the catalytic devices with their back surfaces facing each other, the back surfaces of the two catalytic devices may be apart from each other as in the second embodiment (see FIG. 10). Alternatively, any different holding method from that of FIG. 10 may be employed (for example, using the outer peripheral wall 175 of the plug body 171 to hold them), and the two catalytic devices 100A and 100B are arranged with their back surfaces in close contact with each other. The two catalytic devices 100A and 100B may also be arranged with their front surfaces in close contact with each other with respect to the plug body 171.
(6) In the first embodiment, the configuration is such that the gas G generated in the cell chambers 25 is introduced into the vent plug 70 through the opening 75A on the lower surface of the vent plug 70. As illustrated in FIG. 14, a slit 79 may be provided in the outer peripheral wall 75 of the vent plug 70 so that, in addition to the opening 75A on the lower surface of the vent plug 70, the gas G can also be introduced into the vent plug 70 through the slit 79.

### DESCRIPTION OF REFERENCE NUMERALS

1 Lead-acid battery
10 Battery case
20 Battery container
50 Lid member
70 Vent plug
71 Plug body
80 Filter
90 Splash guard
100A, 100B Catalytic device
110 Case
120 Catalyst layer
130 Permeable membrane

## Claims

1. A lead-acid battery comprising:
a battery case;
electrode plates housed in the battery case;
an electrolyte solution housed in the battery case; and
a vent plug attached to the battery case, wherein
the vent plug includes a tubular plug body, a splash guard positioned inside the plug body, and a plurality of catalytic devices that promote reaction generating water from gas produced by charge-discharge reaction,
each of the plurality of catalytic devices includes a tubular case with an open front surface, a catalyst layer housed in the case, and a permeable membrane covering a front surface of the catalyst layer and allowing gas to pass through,
each of the plurality of catalytic devices are arranged vertically or inclined with respect to the plug body so that a front surface provided with the permeable membrane has an angle with respect to a horizontal direction, and
in an up-down direction, either all or at least a part of the plurality of catalytic devices is arranged at the same height.

2. The lead-acid battery according to claim 1, wherein
the number of the catalytic devices is two, and when viewed in the up-down direction, the two catalytic devices are arranged with front surfaces or back surfaces thereof being opposed in the plug body.

3. The lead-acid battery according to claim 1, wherein
the number of the catalytic devices is three or more, and when viewed in the up-down direction, the catalytic devices are arranged in a circular pattern in the plug body.

4. A vent plug for use in a lead-acid battery, comprising:
a tubular plug body with an open bottom surface;
a splash guard positioned inside the plug body, and
a plurality of catalytic devices that promote reaction generating water from gas,
wherein
each of the plurality of catalytic devices include a tubular case with an open front surface, a catalyst layer housed in the case, and a permeable membrane positioned on a front surface of the case and allowing gas to pass through,
each of the plurality of catalytic devices are arranged vertically or inclined with respect to the plug body so that a front surface of the permeable membrane has an angle with respect to a horizontal direction, and
in an axis direction of the plug body, either all or at least a part of the plurality of catalytic devices is arranged at the same height.
